# EUROPÄISCHE PATENTSCHRIFT

(11) **EP 2 730 438 B1**
(45) Veröffentlichungstag und Bekanntmachung des Hinweises auf die Patenterteilung: **22.03.2017**
(21) Anmeldenummer: 13191974.8
(22) Anmeldetag: 07.11.2013
(51) Int. Cl.: B60G 17/056, B60G 21/073

(54) **Federungseinrichtung für eine beweglich gelagerte Fahrzeugachse**
Sprung suspension device for a moveably mounted vehicle axle
Dispositif de suspension pour un essieu de véhicule logé de façon mobile

(30) Priorität: 12.11.2012 DE 102012022030
(43) Veröffentlichungstag der Anmeldung: 14.05.2014
(73) Patentinhaber: Deere & Company, Moline, IL 61265 (US); Weber-Hydraulik GmbH, 74363 Güglingen (DE)
(72) Erfinder: Kazimiers, Thilo, 01819 Bahretal (DE); Boge, Christof, 48291 Telgte (DE); Müller Dr., Benedikt, 4770 Herresbach/Amel (BE); Zatrieb Dr., Jacek, 74363 Güglingen (DE)
(74) Vertreter: John Deere GmbH & Co. KG

(56) Entgegenhaltungen:
- EP-A2- 1 213 504
- EP-A2- 1 277 604
- DE-A1- 19 719 075
- DE-A1-102010 021 777

## Beschreibung

Die Erfindung betrifft eine Federungseinrichtung für eine beweglich gelagerte Fahrzeugachse, mit mindestens einem zwischen der Fahrzeugachse und einer tragenden Fahrzeugstruktur anbringbaren hydraulischen Federzylinder, wobei der mindestens eine hydraulische Federzylinder eine mit einem ersten Druckspeicher verbundene erste Arbeitskammer sowie eine mit einem zweiten Druckspeicher verbundene zweite Arbeitskammer umfasst.

Eine derartige Federungseinrichtung geht beispielsweise aus der DE 103 37 600 A1 hervor. Die Federungseinrichtung umfasst für jede der beiden Fahrzeugseiten einen zwischen einer pendelnd gelagerten Fahrzeugachse und einem Fahrzeugaufbau angeordneten hydraulischen Federzylinder. Der hydraulische Federzylinder ist von konventioneller Bauart und weist eine als Kolbenraum ausgebildete erste Arbeitskammer sowie eine als Ringraum ausgebildete zweite Arbeitskammer auf. Jede der beiden Arbeitskammern ist mit einem separaten Druckspeicher verbunden. Um den hydraulischen Federzylinder vor dem fahrtbedingten Auftreten übermäßiger Druckspitzen zu schützen, ist ein mit dem Kolbenraum des hydraulischen Federzylinders verbundenes Druckbegrenzungsventil vorgesehen, das über eine Druckablassleitung in ein niederdruckseitiges Hydraulikreservoir der Federungseinrichtung mündet. Da die zwischen dem hydraulischen Federzylinder und dem Hydraulikreservoir zu überbrückenden Leitungsstrecken vergleichsweise lang sind, ist es erforderlich, dass die Druckablassleitung über einen ausreichend großen Innenquerschnitt verfügt. Andernfalls ist ein rascher Abbau der Druckspitzen in Richtung des Hydraulikreservoirs nicht sichergestellt.

Das Dokument DE 103 37 600 A1 wird als nächstliegender Stand der Technik betrachtet.

Die Dokumente EP 1 277 604 A2, DE 10 2010 021 777 A1 und DE 197 19 075 A1 offenbaren auch Federungseinrichtungen.

Aufgrund der hohen Integrationsdichte moderner Fahrzeugumgebungen ergeben sich daher zwangsläufig Probleme bei der Verlegung der Druckablassleitung.

Es ist daher Aufgabe der vorliegenden Erfindung, eine an die hohe Integrationsdichte moderner Fahrzeugumgebungen angepasste überdruckgeschützte Federungseinrichtung anzugeben.

Diese Aufgabe wird durch eine Federungseinrichtung mit den Merkmalen des Patentanspruchs 1 gelöst.

Die erfindungsgemäße Federungseinrichtung für eine beweglich gelagerte Fahrzeugachse weist mindestens einen zwischen der Fahrzeugachse und einer tragenden Fahrzeugstruktur anbringbaren hydraulischen Federzylinder auf, wobei der mindestens eine hydraulische Federzylinder einen mit einem ersten Druckspeicher verbundenen Kolbenraum sowie einen mit einem zweiten Druckspeicher verbundenen Ringraum umfasst. Ein seitens der ersten Arbeitskammer mit Druck beaufschlagtes Druckbegrenzungsventil ist ausgangsseitig bzw. niederdruckseitig mit dem zweiten Druckspeicher verbunden, um den zumindest einen hydraulischen Federzylinder vor dem fahrtbedingten Auftreten vor Druckspitzen zu schützen.

Die Erfindung macht sich den Umstand zunutze, dass der mindestens eine hydraulische Federzylinder sowie die beiden Druckspeicher im Allgemeinen in unmittelbarer räumlicher Nähe zueinander im Fahrzeug untergebracht sind. Entsprechendes gilt für das Druckbegrenzungsventil, das sich zwischen den beiden vorgenannten Komponenten befindet. Eine Überbrückung längerer Leitungsstrecken erübrigt sich damit von vornherein.

Die beweglich gelagerte Fahrzeugachse ist beispielsweise als starre Pendelachse ausgebildet. Bei der Pendelachse handelt es sich insbesondere um eine gefederte Vorderachse eines landwirtschaftlichen Traktors. Jeder der beiden Seiten der Pendelachse ist ein separater hydraulischer Federzylinder zugeordnet, sodass bei einer Bewegung der Pendelachse die hydraulischen Federzylinder gegensinnig ein- bzw. ausgelenkt werden.

Der Kolbernraum bzw. der Ringraum der hydraulischen Federzylinder sind jeweils parallel mit dem ersten bzw. zweiten Druckspeicher verbunden. Der hydraulische Federzylinder ist insbesondere als herkömmlicher doppeltwirkender Hydraulikzylinder ausgebildet. Es sei an dieser Stelle angemerkt, dass eine Verwendung der erfindungsgemäßen Federungseinrichtung nicht auf eine starre Pendelachse beschränkt ist. Vielmehr kann diese auch im Zusammenhang mit einer Einzelradaufhängung genutzt werden.

Weitere vorteilhafte Ausführungsformen der erfindungsgemäßen Federungseinrichtung gehen aus den Unteransprüchen hervor.

Vorzugsweise ist der erste und/oder zweite Druckspeicher als Hydrospeicher ausgebildet. Der Hydrospeicher umfasst einen Druckbehälter, der durch ein drucknachgiebiges Trennglied in eine erste und zweite Druckkammer unterteilt ist. Die erste Druckkammer ist mit dem mindestens einen hydraulischen Federzylinder verbunden, wohingegen ein in der zweiten Druckkammer befindliches und unter Druck stehendes Gas eine auf das Trennglied einwirkende Gasfeder bildet. Bei dem Gas handelt es sich in der Regel um Stickstoff oder eine gasförmige Stickstoffverbindung. Alternativ kann der Hydrospeicher auch als federbelasteter Speicher ausgebildet sein, bei dem anstelle eines Gases ein mechanisch vorgespanntes Federelement auf das Trennglied einwirkt. Bei dem Trennglied handelt es sich beispielsweise um eine aus einer geeigneten Gummimischung bestehende elastische Membran, eine Elastomerblase oder einen Metallbalg. Alternativ ist es jedoch auch denkbar, einen innerhalb des Hydrospeichers verschiebbar gelagerten Kolben vorzusehen.

Der mit dem Kolbenraum verbundene erste Druckspeicher kann aus einer Parallelschaltung zweier separater Druckspeicher bestehen. Auf diese Weise lässt sich ein vergleichsweise geringer Anstieg der Federkennlinie im Bereich geringer bis mittlerer Achslasten erzielen, wohingegen der Anstieg der Federkennlinie progressiv im Bereich hoher Achslasten, wie sie beispielsweise beim Ausheben eines Pflugs an einem landwirtschaftlichen Traktor auftreten, zunimmt. In letzterem Fall ist eine verbesserte Abstützung der tragenden Fahrzeugstruktur gegenüber dem Erdboden gewährleistet.

Auch besteht die Möglichkeit, dass der Kolbenraum und der Ringraum des mindestens einen hydraulischen Federzylinders mittels einer Umschaltventilanordnung jeweils wahlweise mit einer Druckquelle oder einem Hydraulikreservoir eines zentralen Hydrauliksystems verbindbar ist. Durch geeignete Ansteuerung der Umschaltventilanordnung lassen sich daher das Niveau der tragenden Fahrzeugstruktur gegenüber dem Erdboden und/oder die Federrate der Federungseinrichtung gezielt beeinflussen. Die Ansteuerung der Umschaltventilanordnung kann beispielsweise mittels einer elektronischen Steuereinrichtung erfolgen, die zur Einregelung eines gegenüber dem Erdboden einzuhaltenden Niveaus und/oder einer durch eine übergeordnete Steuerung vorgegebenen Federrate neben einer bedienerseitigen Lagevorgabe ferner die Signale eines an der tragenden Fahrzeugstruktur angebrachten Lagesensors sowie eines Arbeitsdrucksensors auswertet, wobei letzterer insbesondere einen in dem Ringraum des mindestens einen hydraulischen Federzylinders herrschenden Arbeitsdruck erfasst.

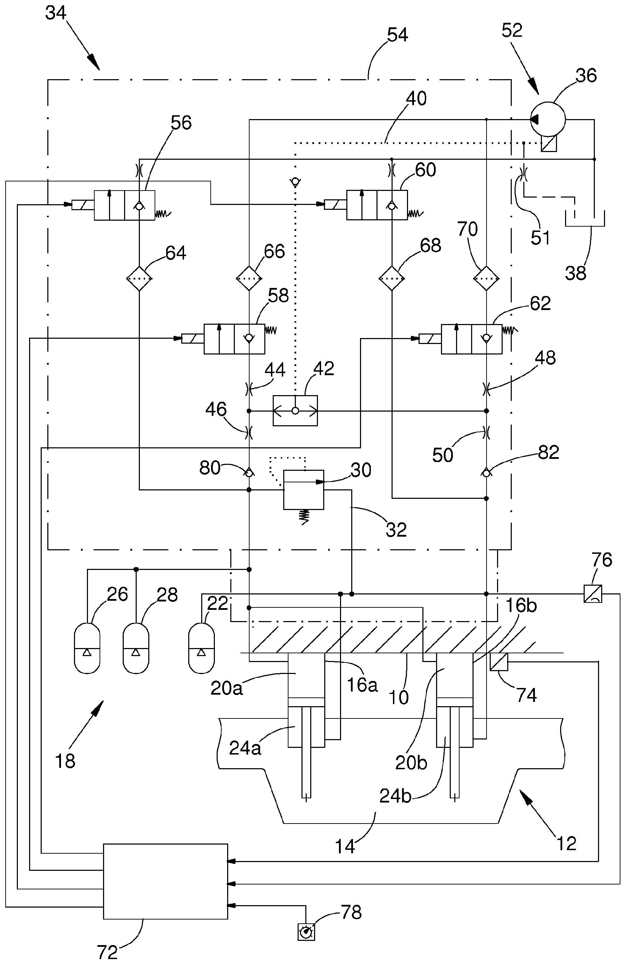

Die erfindungsgemäße Federungseinrichtung wird im Folgenden anhand der beigefügten Zeichnung näher erläutert. Dabei zeigt die einzige Figur ein schematisch dargestelltes Ausführungsbeispiel der erfindungsgemäßen Federungseinrichtung für eine beweglich gelagerte Fahrzeugachse eines landwirtschaftlichen Traktors.

Die gegenüber einer tragenden Fahrzeugstruktur 10 beweglich gelagerte Fahrzeugachse 12 ist beispielsgemäß als starre Pendelachse 14 ausgebildet. Bei der Pendelachse 14 handelt es sich im vorliegenden Fall um eine gefederte Vorderachse des landwirtschaftlichen Traktors. Jeder der beiden Seiten der Pendelachse 14 ist ein separater hydraulischer Federzylinder 16a, 16b zugeordnet. Die hydraulischen Federzylinder 16a, 16b sind jeweils mittels zugehöriger Gelenkverbindungen zwischen der Pendelachse 14 und der als rahmenloses Fahrzeugchassis ausgebildeten tragenden Fahrzeugstruktur 10 angebracht. Bei einer Bewegung der Pendelachse 14 werden die hydraulischen Federzylinder 16a, 16b gegensinnig ein- bzw. ausgelenkt.

Die hydraulischen Federzylinder 16a, 16b sind als herkömmliche doppeltwirkende Hydraulikzylinder ausgebildet, wobei diese mit einem ersten Druckspeicher 18 verbundene erste bzw. obere Arbeitskammern 20a, 20b sowie mit einem zweiten Druckspeicher 22 verbundene zweite bzw. untere Arbeitskammern 24a, 24b umfassen. Der mit den ersten Arbeitskammern 20a, 20b verbundene erste Druckspeicher 18 besteht aus einer Parallelschaltung zweier separater Druckspeicher 26, 28, wobei diese vorzugsweise übereinstimmende Federkennlinien aufweisen.

Die beiden Druckspeicher 18, 22 sind jeweils als Hydrospeicher ausgebildet. Jeder der Hydrospeicher umfasst einen Druckbehälter, der durch ein drucknachgiebiges Trennglied in Gestalt einer elastischen Membran in eine erste und zweite Druckkammer unterteilt ist. Die erste Druckkammer ist mit den hydraulischen Federzylindern 16a, 16b verbunden, wohingegen ein in der zweiten Druckkammer befindliches und unter Druck stehendes Gas eine auf das Trennglied einwirkende Gasfeder bildet. Bei dem Gas handelt es sich um Stickstoff oder eine gasförmige Stickstoffverbindung.

Um die hydraulischen Federzylinder 16a, 16b vor dem fahrtbedingten Auftreten übermäßiger Druckspitzen zu schützen, ist ein seitens der beiden ersten Arbeitskammern 20a, 20b mit Druck beaufschlagbares Druckbegrenzungsventil 30 vorgesehen, das ausgangsseitig bzw. niederdruckseitig über eine Druckablassleitung 32 mit dem zweiten Druckspeicher 22 der erfindungsgemäßen Federungseinrichtung 34 verbunden ist. Bei dem Druckbegrenzungsventil 30 handelt es sich gemäß einer ersten Ausführungsform um ein Druckfolgeventil, das einen federbelasteten Ventilschieber aufweist, dessen Federraum mit der Umgebungsatmosphäre bzw. einem niederdruckseitigen Hydraulikreservoir 38 verbunden ist, wobei der federbelastete Ventilschieber bei Überschreiten eines bestimmten eingangsseitigen Hydraulikdrucks in der Größenordnung von 250 bar in eine geöffnete Stellung versetzt wird. Gemäß einer zweiten Ausführungsform ist das Druckbegrenzungsventil 30 von herkömmlicher Bauart. Die Federkammer des Druckbegrenzungsventils 30 ist in diesem Fall intern mit der Druckablassleitung 32 verbunden.

Des Weiteren ist eine als Verstellpumpe 36 ausgebildete Druckquelle vorgesehen. Die Steuerung der aus dem niederdruckseitigen Hydraulikreservoir 38 gespeisten Verstellpumpe 36 erfolgt in an sich bekannter Weise mittels einer Sensorleitung 40, die über ein Wechselventil 42 einen aus dem Arbeitsdruck der ersten Arbeitskammern 20a, 20b bzw. der zweiten Arbeitskammern 24a, 24b abgeleiteten Steuerdruck an die Verstellpumpe 36 übermittelt. Mehrere Drosselventile 44, 46, 48 und 50 dienen hierbei der Stabilisierung des über die Sensorleitung 40 an die Verstellpumpe 36 zu übertragenden Steuerdrucks. Ein zusätzliches Drosselventil 51 dient der Druckentlastung der Sensorleitung 40 in Richtung des niederdruckseitigen Hydraulikreservoirs 38.

Die Verstellpumpe 36 ist - wie auch das Hydraulikreservoir 38 - Bestandteil eines zentralen Hydrauliksystems 52, das zum Betreiben weiterer hydraulischer Fahrzeugsysteme, wie einer hydraulischen Fahrzeuglenkung und hydraulischer Radbremsen, genutzt wird.

Eine Umschaltventilanordnung 54 ermöglicht es, das Niveau der tragenden Fahrzeugstruktur 10 gegenüber dem Erdboden sowie die Federrate der Federungseinrichtung 10 gezielt zu beeinflussen. Hierzu sind die ersten und zweiten Arbeitskammern 20a, 20b, 24a und 24b der hydraulischen Federzylinder 16a, 16b mittels mehrerer elektrisch betätigbarer 2/2-Wegeventile 56, 58, 60 und 62 entweder mit der Verstellpumpe 36 oder dem Hydraulikreservoir 38 verbindbar.

Eine Vielzahl von Filterelementen 64, 66, 68, 70 dient der Vorbeugung unerwünschter Funktionsbeeinträchtigungen der Umschaltventilanordnung 54 aufgrund von in der Hydraulikflüssigkeit enthaltenen Verunreinigungen.

In der Figur ist die erfindungsgemäße Federungseinrichtung 34 in einem für den Arbeitsbetrieb des landwirtschaftlichen Traktors vorgesehenen Grundzustand wiedergegeben. Sämtliche 2/2-Wegeventile 56, 58, 60 und 62 befinden sich in ihrer geschlossenen Stellung, sodass ein Zufluss von Hydraulikflüssigkeit von Seiten der Verstellpumpe 36 wie auch deren Abfluss in Richtung des Hydraulikreservoirs 38 unterbunden ist. Es besteht lediglich eine stetige Druckaustauschverbindung zwischen den Arbeitskammern 20a, 20b, 24a und 24b der hydraulischen Federzylinder 16a, 16b und den zugehörigen Druckspeichern 18, 20. Mit anderen Worten weist die erfindungsgemäße Federungseinrichtung 34 in ihrem Grundzustand die Funktion einer gewöhnlichen Vorderachsfederung auf.

Die Ansteuerung der Umschaltventilanordnung 54 erfolgt mittels einer elektronischen Steuereinrichtung 72, die zur Einregelung eines gegenüber dem Erdboden einzuhaltenden Niveaus und/oder einer durch eine übergeordnete Steuerung vorgegebenen Federrate neben einer bedienerseitigen Lagevorgabe die Signale eines an der tragenden Fahrzeugstruktur 10 angebrachten Lagesensors 74 sowie eines Arbeitsdrucksensors 76 auswertet. Beispielsgemäß erfasst der Arbeitsdrucksensor 76 den in den zweiten Arbeitskammern 24a, 24b der hydraulischen Federzylinder 16a, 16b herrschenden Arbeitsdruck. Die fahrerseitige Lagevorgabe erfolgt dabei mittels eines in einer Fahrerkabine des landwirtschaftlichen Traktors vorgesehenen Bedienelements 78.

Soll das Niveau der tragenden Fahrzeugstruktur 10 gegenüber dem Erdboden angehoben werden, so öffnet die elektronische Steuereinrichtung 72 zunächst das 2/2-Wegeventil 58. Aufgrund des dabei in der Sensorleitung 40 auftretenden Steuerdruckanstiegs wird die Verstellpumpe 36 veranlasst, unter erhöhtem Druck stehende Hydraulikflüssigkeit in die ersten Arbeitskammern 20a, 20b der hydraulischen Federzylinder 16a, 16b zu fördern, wodurch die tragende Fahrzeugstruktur 10 angehoben wird. Ein federbelastetes Rückschlagventil 80 verhindert hierbei ein zu einem unerwünschten Arbeitsdruckabfall führendes Abfließen von Hydraulikflüssigkeit aus den ersten Arbeitskammern 20a, 20b der hydraulischen Federzylinder 16a, 16b.

Zugleich steigt der Arbeitsdruck in den gegenüberliegenden zweiten Arbeitskammern 24a, 24b der hydraulischen Federzylinder 16a, 16b, wobei bei Erreichen eines Schwellenwertes des mittels des Arbeitsdrucksensors 76 erfassten Arbeitsdrucks in der Größenordnung von 87 bar das 2/2-Wegeventil 60 geöffnet wird, um eine Druckentlastung der zweiten Arbeitskammern 24a, 24b durch Ableitung von Hydraulikflüssigkeit in Richtung des Hydraulikreservoirs 38 zu ermöglichen.

Soll hingegen das Niveau der tragenden Fahrzeugstruktur 10 gegenüber dem Erdboden abgesenkt werden, so öffnet die elektronische Steuereinrichtung 72 zunächst das 2/2-Wegeventil 56, sodass die Verstellpumpe 36 unter Druck stehende Hydraulikflüssigkeit in die zweiten Arbeitskammern 24a, 24b der hydraulischen Federzylinder 16a, 16b fördert und die tragende Fahrzeugstruktur 10 durch den Zufluss der Hydraulikflüssigkeit abgesenkt wird. Ein federbelastetes Rückschlagventil 82 verhindert hierbei ein zu einem unerwünschten Arbeitsdruckabfall führendes Abfließen von Hydraulikflüssigkeit aus den zweiten Arbeitskammern 24a, 24b der hydraulischen Federzylinder 16a, 16b.

Gleichzeitig steigt der Arbeitsdruck in den gegenüberliegenden ersten Arbeitskammern 20a, 20b der hydraulischen Federzylinder 16a, 16b, wobei bei Erreichen eines Schwellenwertes des mittels des Arbeitsdrucksensors 60 erfassten Arbeitsdrucks in der Größenordnung von 87 bar das 2/2-Wegeventil 62 geöffnet wird, um ein Abfließen von Hydraulikflüssigkeit in Richtung des Hydraulikreservoirs 38 zu ermöglichen.

Der vorhergehend beschriebene Anhebe- bzw. Absenkvorgang erfolgt solange, bis die tragende Fahrzeugstruktur 10 das entsprechend der fahrerseitigen Lagevorgabe gewünschte Niveau erreicht hat. Letzteres erkennt die elektronische Steuereinrichtung 72 durch Auswertung der seitens des Lagesensors 74 bereitgestellten Signale. Danach wird die erfindungsgemäße Federungseinrichtung 34 durch Schließen der beiden 2/2-Wegeventile 58, 60 bzw. 56, 62 in ihren Grundzustand zurückversetzt.

## Patentansprüche

1. Federungseinrichtung für eine beweglich gelagerte Fahrzeugachse, mit mindestens einem zwischen der Fahrzeugachse (12) und einer tragenden Fahrzeugstruktur (10) anbringbaren hydraulischen Federzylinder (16a, 16b), wobei der mindestens eine hydraulische Federzylinder (16a, 16b) einen mit einem ersten Druckspeicher (18) verbundenen Kolbenraum (20a, 20b) sowie einen mit einem zweiten Druckspeicher (22) verbundenen Ringraum (24a, 24b) umfasst, **dadurch gekennzeichnet, dass** ein seitens des Kolbenraums (20a, 20b) mit Druck beaufschlagtes Druckbegrenzungsventil (30) ausgangsseitig mit dem zweiten Druckspeicher (22) verbunden ist, um den zumindest einen hydraulischen Federzylinder (16a, 16b) vor dem fahrtbedingten Auftreten vor Druckspitzen zu schützen.

2. Federungseinrichtung nach Anspruch 1, **dadurch gekennzeichnet, dass** der erste und/oder zweite Druckspeicher (18, 22) als Hydrospeicher ausgebildet ist.

3. Federungseinrichtung nach Anspruch 1 oder 2, **dadurch gekennzeichnet, dass** der mit dem Kolbenraum (20a, 20b) verbundene erste Druckspeicher (18) aus einer Parallelschaltung zweier separater Druckspeicher (26, 28) besteht.

4. Federungseinrichtung nach einem der Ansprüche 1 bis 3, **dadurch gekennzeichnet, dass** der Kolbenraum oder der Ringraum (20a, 20b, 24a, 24b) des mindestens einen hydraulischen Federzylinders (16a, 16b) mittels einer Umschaltventilanordnung (54) wahlweise mit einer Druckquelle (36) oder einem Hydraulikreservoir (38) eines zentralen Hydrauliksystems (52) verbindbar ist.

5. Federungseinrichtung nach einem der Ansprüche 1 bis 4, **dadurch gekennzeichnet, dass** es sich bei dem Druckbegrenzungsventil (30) um ein Druckfolgeventil handelt.

## Claims

1. Suspension device for a movably mounted vehicle axle, with at least one hydraulic spring cylinder (16a, 16b) which can be mounted between the vehicle axle (12) and a supporting vehicle structure (10), wherein the at least one hydraulic spring cylinder (16a, 16b) comprises a piston space (20a, 20b) connected to a first pressure accumulator (18), and an annular space (24a, 24b) connected to a second pressure accumulator (22), **characterized in that** a pressure-limiting valve (30) which is pressurized by the piston space (20a, 20b) is connected on the output side to the second pressure accumulator (22) in order to protect the at least one hydraulic spring cylinder (16a, 16b) against the travel-induced occurrence of pressure peaks.

2. Suspension device according to Claim 1, **characterized in that** the first and/or second pressure accumulator (18, 22) is designed as a hydraulic accumulator.

3. Suspension device according to Claim 1 or 2, **characterized in that** the first pressure accumulator (18) which is connected to the piston space (20a, 20b) consists of a parallel connection of two separate pressure accumulators (26, 28).

4. Suspension device according to one of Claims 1 to 3, **characterized in that** the piston space or the annular space (20a, 20b, 24a, 24b) of the at least one hydraulic spring cylinder (16a, 16b) is connectable by means of a switch-over valve arrangement (54) either to a pressure source (36) or to a hydraulic reservoir (38) of a central hydraulic system (52).

5. Suspension device according to one of Claims 1 to 4, **characterized in that** the pressure-limiting valve (30) is a pressure sequence valve.

## Revendications

1. Dispositif de suspension pour un essieu de véhicule supporté de manière mobile, comprenant au moins un cylindre à ressort hydraulique (16a, 16b) pouvant être monté entre l'essieu du véhicule (12) et une structure porteuse du véhicule (10), l'au moins un cylindre à ressort hydraulique (16a, 16b) comprenant un espace de piston (20a, 20b) connecté à un premier accumulateur de pression (18) ainsi qu'un espace annulaire (24a, 24b) connecté à un deuxième accumulateur de pression (22), **caractérisé en ce qu'**une soupape de limitation de la pression (30) sollicitée par la pression du côté de l'espace de piston (20a, 20b) est connectée du côté de la sortie au deuxième accumulateur de pression (22), afin de protéger l'au moins un cylindre à ressort hydraulique (16a, 16b) de l'apparition de pointes de pression provoquées par la conduite.

2. Dispositif de suspension selon la revendication 1, **caractérisé en ce que** le premier et/ou le deuxième accumulateur de pression (18, 22) sont réalisés sous forme d'accumulateur hydraulique.

3. Dispositif de suspension selon la revendication 1 ou 2, **caractérisé en ce que** le premier accumulateur de pression (18) connecté à l'espace de piston (20a, 20b) se compose d'un montage en parallèle de deux accumulateurs de pression séparés (26, 28).

4. Dispositif de suspension selon l'une quelconque des revendications 1 à 3, **caractérisé en ce que** l'espace de piston ou l'espace annulaire (20a, 20b, 24a, 24b) de l'au moins un cylindre à ressort hydraulique (16a, 16b) peut être connecté au moyen d'un agencement de soupape d'inversion (54) de manière sélective à une source de pression (36) ou à un réservoir hydraulique (38) d'un système hydraulique central (52).

5. Dispositif de suspension selon l'une quelconque des revendications 1 à 4, **caractérisé en ce que** la soupape de limitation de la pression (30) est une soupape suiveuse de pression.
